# EUROPEAN PATENT SPECIFICATION

(11) **EP 2 835 704 B1**
(45) Date of publication and mention of the grant of the patent: **23.03.2016**
(21) Application number: 13179401.8
(22) Date of filing: 06.08.2013
(51) Int. Cl.: G05B 19/4062

(54) **Actuator assembly**
Aktuatoranordnung
Ensemble actionneur

(43) Date of publication of application: 11.02.2015
(73) Proprietor: ABB Technology Oy, 00380 Helsinki (FI)
(72) Inventor: Havanto, Petri, 00380 Helsinki (FI); Ristolainen, Mikko, 00380 Helsinki (FI); Jaatinen, Juhana, 00380 Helsinki (FI)
(74) Representative: Kolster Oy Ab

(56) References cited:
- US-A- 4 965 502

## Description

### FIELD OF THE INVENTION

The invention relates to an actuator assembly according to the preamble of independent claim 1.

One of the problems associated with known actuator assemblies as disclosed in document US 4,965,502 is that if an actuator of a known actuator assembly is motionless for a long period of time during an operational state of the actuator assembly, the actuator assembly transfers to a safety state in which a work motion of the actuator is prevented. Said transition to the safety state results from requirements for Safety Integrity Level (SIL). Transferring from the safety state back to an operational state in which the work motion of the actuator is allowed takes time and therefore a fast start of the actuator assembly is not possible.

### BRIEF DESCRIPTION OF THE INVENTION

An object of the present invention is to provide an actuator assembly so as to solve the above problem. The object of the invention is achieved by an actuator assembly which is characterized by what is stated in the independent claim 1. The preferred embodiments of the invention are disclosed in the dependent claims.

The invention is based on the idea of providing an actuator assembly with activation means adapted to monitor an immobility time of the actuator during an operational state of the actuator assembly, and in case the immobility time exceeds a predetermined activation time to control the power means to provide an activation motion of the actuator, the activation time being shorter than or equal to a process safety time, the activation motion being a small motion while being big enough for being detected by motion sensor means.

An advantage of the actuator assembly of the invention is that the actuator assembly can remain in an operational state regardless of work motion of the actuator and still fulfil requirements for desired Safety Integrity Level.

### DETAILED DESCRIPTION OF THE INVENTION

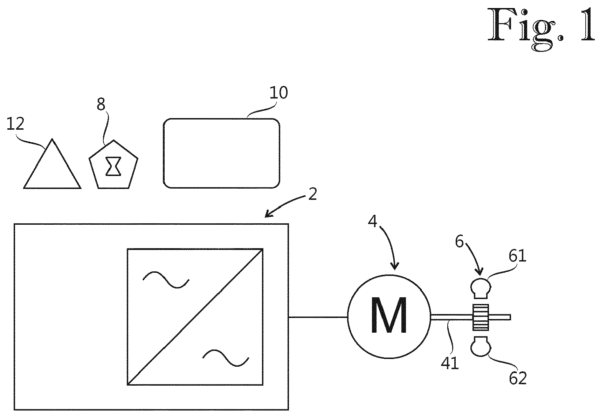

In the following the invention will be described in greater detail by means of preferred embodiments with reference to the attached Figure 1 which shows an actuator assembly according to an embodiment of the invention.

The actuator assembly of Figure 1 comprises power means 2, an actuator 4, motion sensor means 6, timing means 8, safety means 10 and activation means 12. The actuator 4 is powered by the power means 2. The power means 2 is adapted to provide a work motion of the actuator 4. The motion sensor means 6 is adapted for monitoring motion of the actuator 4, the motion sensor means 6 comprising motion sensor units 61 and 62. The motion sensor means 6 is adapted to provide motion sensor signals in response to motion of the actuator 4. The timing means 8 is adapted for receiving the motion sensor signals and measuring an immobility time of the actuator 4 based on the motion sensor signals, the immobility time of the actuator representing time lapsed after previous motion of the actuator 4. The safety means 10 is adapted for selectively controlling the actuator assembly into an operational state in which the work motion of the actuator 4 is allowed and a safety state in which the work motion of the actuator 4 is prevented. The safety means 10 is also adapted to monitor the immobility time of the actuator and to prevent the operational state of the actuator assembly in case the immobility time of the actuator exceeds a predetermined process safety time.

In an embodiment the timing means measure the immobility time of the actuator by measuring a length of a period during which signals from the motion sensor means are unchanged.

The activation means 12 is adapted to monitor an immobility time of the actuator during an operational state of the actuator assembly, and to control the power means 2 to provide an activation motion of the actuator 4 in case the immobility time exceeds a predetermined activation time. Depending on the embodiment, the activation means may be adapted to monitor an immobility time of the actuator only during an operational state of the actuator assembly or always when the activation means is on. An activation time is shorter than or equal to a process safety time. An activation motion is a small motion while being big enough for being detected by the motion sensor means 6. An activation motion is smaller than a work motion. Purpose of an activation motion is to verify that motion sensor means 6 is functional.

Magnitude of an activation motion is chosen such that the activation motion is safe to perform and does not interfere with a process in which the actuator assembly is used. In an embodiment magnitude of an activation motion is chosen to be the smallest motion detectable by the motion sensor means.

Herein the process safety time is the shortest period of time it can take for the monitored process to transition from the normal state to a state capable of causing a hazard. The normal state is a state in which the risk the process causes is sufficiently low for its intended application. This means that the process safety time is the amount of time that is available to transfer the actuator assembly into a safety state in case of a failure. The actuator assembly cannot change from safe to dangerous within the process safety time. The process safety time may vary from milliseconds to several minutes depending on an embodiment.

The safety means 10 is adapted to provide the activation motion of the actuator 4 by controlling the activation means 12. The activation motion of the actuator 4 is a reciprocating motion that starts and ends at a same position. Therefore the actuator 4 remains in a same position even after a plurality of activation motions. In alternative embodiments in which there are no limitations for movements of actuator the activation motion may be unidirectional and may be carried out in a same direction every time.

In Figure 1 the power means 2, the timing means 8, the safety means 10 and the activation means 12 are depicted as separate units. However, in alternative embodiments said several units may be combined into larger units. For example, the activation means may be incorporated in the power means or in the safety means, or part of the functions of the activation means may be incorporated in the power means while rest of the functions of the activation means are incorporated in the safety means. It is also possible to incorporate the timing means in the safety means, and/or to incorporate the timing means in the activation means.

The safety means 10 is adapted to control the power means 2 to provide an activation motion of the actuator 4 prior to controlling the actuator assembly to an operational state, wherein the safety means 10 is adapted to control the actuator assembly to the operational state only if the motion sensor means 6 detects the activation motion. If the motion sensor means 6 does not detect the activation motion generated by the power means 2 the safety means 10 concludes that there is a malfunction in the motion sensor means 6 in which case it is not safe to transfer to the operational state.

The safety means may be adapted to indirectly control the power means to provide an activation motion. The safety means may simply inform the power means about an intention to transfer into an operational state, wherein the power means performs an activation motion in response to the information relating to the intention.

In an embodiment safety means is adapted to allow transferring into an operational state only after proper functioning of motion sensor means has been verified, regardless of an immobility time of the actuator. In said embodiment the safety means is adapted always to provide an activation motion of the actuator prior to controlling the actuator assembly to the operational state, wherein the actuator assembly is controlled to the operational state only if the motion sensor means detects the activation motion. In an alternative embodiment, in which the activation means is adapted always to monitor an immobility time of the actuator, safety means requires an activation motion before transition to an operational state only if an immobility time of the actuator exceeds a process safety time.

In the embodiment of Figure 1 the power means 2 is off in the safety state. Since the power means 2 is unenergized, any motion of the actuator 4 is prevented in the safety state. The safety means 10 is adapted to provide an intermediate state for the actuator assembly in which only an activation motion of the actuator 4 is allowed. The intermediate state enables verifying proper functioning of motion sensor means 6 prior to transferring to an operational state.

In an embodiment an actuator assembly may be started from the safety state by allowing an operational state of the actuator assembly for a limited time in order to verify proper functioning of motion sensor means by performing an activation motion. A continuous operational state is only allowed after a proper functioning of motion sensor means has been verified. Said limited time may only be shorter than or equal to the process safety time.

In an alternative embodiment safety means may be adapted to allow an activation motion of the actuator in a safety state. This naturally requires that power means is energized in the safety state.

If the actuator assembly is in the operational state when the immobility time of the actuator exceeds the predetermined process safety time the safety means 10 controls the actuator assembly into the safety state. In an alternative embodiment the safety means controls the actuator assembly into an intermediate state in which only an activation motion of the actuator is allowed.

Motion sensor units 61 and 62 are independent from each other. Therefore the motion sensor means 6 is a redundant motion sensor means. In alternative embodiments motion sensor means may comprise only one motion sensor unit or more than two motion sensor units.

Mean time to failure (MTTF) for each one of the motion sensor units 61 and 62 is 10⁶ hours, i.e. million hours. Therefore probability that both motion sensor units break down during ten hours is approximately 10⁻¹⁰.

When MTTF is known for each motion sensor unit of motion sensor means, it is possible to calculate the upper limit of Safety Integrity Level (SIL) of the actuator assembly. Safety Integrity Level may be improved by increasing a number of independent motion sensor units and/or choosing motion sensor units with higher MTTF. Therefore it is possible to achieve a desired Safety Integrity Level by appropriate design of motion sensor means, provided that the other equipment and the development processes can be shown to be sufficient for the given SIL.

The motion sensor units 61 and 62 comprise high threshold logic encoders, or HTL encoders. In alternative embodiments motion sensor means may comprise another type of digital encoders or analog encoders.

The power means 2 comprises a frequency converter. In alternative embodiments power means may comprise a controllable direct-current supply or some other device capable of controllably power an actuator. The actuator 4 comprises a rotating electric machine, wherein the motion sensor means 6 is adapted to monitor rotation of a shaft 41 of the rotating electric machine. In an alternative embodiment an actuator may comprise a linear motor, wherein the motion sensor means is adapted to monitor linear motion of the motor.

It will be obvious to a person skilled in the art that the inventive concept can be implemented in various ways. The invention and its embodiments are not limited to the examples described above but may vary within the scope of the claims.

## Claims

1. An actuator assembly comprising:
power means (2),
an actuator (4) powered by the power means (2), the power means (2) being adapted to provide a work motion of the actuator (4),
motion sensor means (6) for monitoring motion of the actuator (4), the motion sensor means (6) comprising at least one motion sensor unit (61, 62), the motion sensor means (6) being adapted to provide motion sensor signals in response to motion of the actuator (4),
timing means (8) for receiving the motion sensor signals and measuring an immobility time of the actuator (4) based on the motion sensor signals, the immobility time of the actuator representing time lapsed after previous motion of the actuator (4),
safety means (10) for selectively controlling the actuator assembly into an operational state in which the work motion of the actuator (4) is allowed and a safety state in which the work motion of the actuator (4) is prevented, the safety means (10) being adapted to monitor the immobility time of the actuator and to prevent the operational state of the actuator assembly in case the immobility time of the actuator exceeds a predetermined process safety time, **characterized in that**
the actuator assembly further comprises activation means (12) adapted to monitor an immobility time of the actuator during an operational state of the actuator assembly, and to control the power means (2) to provide an activation motion of the actuator (4) in case the immobility time exceeds a predetermined activation time, the activation time being shorter than or equal to the process safety time, the activation motion being a small motion while being big enough for being detected by the motion sensor means (6).

2. An actuator assembly according to claim 1, **characterized in that** the safety means (10) is adapted to prevent the operational state of the actuator assembly such that if the actuator assembly is in the operational state when the immobility time of the actuator exceeds the predetermined process safety time the safety means (10) controls the actuator assembly into the safety state.

3. An actuator assembly according to claim 1 or 2, **characterized in that** the safety means (10) is further adapted to selectively control the actuator assembly into an intermediate state in which only an activation motion of the actuator (4) is allowed, the intermediate state enabling verifying proper functioning of motion sensor means (6) prior to transferring to an operational state.

4. An actuator assembly according to claim 1 or 2, **characterized in that** the safety means (10) is adapted to allow starting of the actuator assembly from an off state by allowing an operational state of the actuator assembly for a limited time in order to verify proper functioning of motion sensor means (6) through an activation motion, said limited time being shorter than or equal to the process safety time.

5. An actuator assembly according to any one of claims 1 to 3, **characterized in that** the safety means (10) is adapted to control the power means (2) to provide an activation motion of the actuator (4) prior to controlling the actuator assembly to an operational state, wherein the safety means (10) is adapted to control the actuator assembly to the operational state only if the motion sensor means (6) detects the activation motion.

6. An actuator assembly according to claim 5, **characterized in that** the safety means (10) is adapted to control the power means (2) to provide an activation motion of the actuator (4) prior to controlling the actuator assembly to the operational state only in case the immobility time of the actuator exceeds the predetermined process safety time.

7. An actuator assembly according to claim 5 or 6, **characterized in that** the safety means (10) is adapted to provide the activation motion of the actuator (4) by controlling the activation means (12).

8. An actuator assembly according to any one of the preceding claims, **characterized in that** the activation motion of the actuator (4) is a reciprocating motion.

9. An actuator assembly according to claim 8, **characterized in that** the activation motion of the actuator (4) is a reversible reciprocating motion that starts and ends at a same position.

10. An actuator assembly according to any one of the preceding claims, **characterized in that** the motion sensor means (6) is a redundant motion sensor means comprising a plurality of motion sensor units (61, 62) independent from each other.

11. An actuator assembly according to any one of the preceding claims, **characterized in that** the motion sensor means (6) comprises a digital encoder.

12. An actuator assembly according to claim 11, **characterized in that** the motion sensor means (6) comprises a high threshold logic encoder.

13. An actuator assembly according to any one of the preceding claims, **characterized in that** the power means (2) comprises a frequency converter.

## Patentansprüche

1. Aktuatoranordnung mit:
Kraftmitteln (2);
einem mit den Kraftmitteln (2) angetriebenen Aktuator (4), welche Kraftmittel (2) angepasst sind, eine Arbeitsbewegung des Aktuators (4) zustande zu bringen,
Bewegungssensormitteln (6) zur Überwachung von Bewegung des Aktuators (4), welche Bewegungssensormittel (6) zumindest eine Bewegungssensoreinheit (61, 62) aufweisen, wobei die Bewegungssensormittel (6) angepasst sind, Bewegungssensorsignale als Reaktion auf die Bewegung des Aktuators (4) bereitzustellen,
Zeitmessungsmitteln (8) zum Empfangen der Bewegungssensorsignale und zum Messen einer Immobilitätszeit des Aktuators (4) aufgrund der Bewegungssensorsignale, welche Immobilitätszeit des Aktuators die Zeit repräsentiert, die nach der vorherigen Bewegung des Aktuators (4) vergangen ist,
Sicherheitsmitteln (10) zur selektiven Steuerung der Aktuatoranordnung in einen Betriebszustand, in dem die Arbeitsbewegung des Aktuators (4) erlaubt ist, und einen Sicherheitszustand, in dem die Arbeitsbewegung des Aktuators (4) verhindert ist, wobei die Sicherheitsmittel (10) angepasst sind, die Immobilitätszeit des Aktuators zu überwachen und den Betriebszustand der Aktuatoranordnung zu verhindern, falls die Immobilitätszeit des Aktuators eine vorbestimmte Prozess-Sicherheitszeit überschreitet, **dadurch gekennzeichnet, dass**
die Aktuatoranordnung ferner Aktivierungsmittel (12) aufweist, die angepasst sind, eine Immobilitätszeit des Aktuators während eines Betriebszustandes der Aktuatoranordnung zu überwachen und die Kraftmittel (2) zu steuern, eine Aktivierungsbewegung des Aktuators (4) zustande zu bringen, falls die Immobilitätszeit eine vorbestimmte Aktivierungszeit überschreitet, wobei die Aktivierungszeit kürzer als oder gleich wie die Prozess-Sicherheitszeit ist, wobei die Aktivierungsbewegung eine kleine, aber ausreichend große Bewegung ist, um durch die Bewegungssensormittel (6) ermittelt zu werden.

2. Aktuatoranordnung nach Patentanspruch 1, **dadurch gekennzeichnet, dass** das Sicherheitsmittel (10) angepasst ist, den Betriebszustand der Aktuatoranordnung derart zu verhindern, dass, falls sich die Aktuatoranordnung im Betriebszustand befindet, wenn die Immobilitätszeit des Aktuators die vorbestimmte Prozess-Sicherheitszeit überschreitet, das Sicherheitsmittel (10) die Aktuatoranordnung in den Sicherheitszustand steuert.

3. Aktuatoranordnung nach Patentanspruch 1 oder 2, **dadurch gekennzeichnet, dass** das Sicherheitsmittel (10) ferner angepasst ist, die Aktuatoranordnung selektiv in einen Zwischenzustand zu steuern, in dem nur eine Aktivierungsbewegung des Aktuators (4) erlaubt ist, welcher Zwischenzustand die Prüfung eines ordnungsgemäßen Funktionierens der Bewegungssensormittel (6) ermöglicht, bevor man auf einen Betriebszustand umstellt.

4. Aktuatoranordnung nach Patentanspruch 1 oder 2, **dadurch gekennzeichnet, dass** das Sicherheitsmittel (10) angepasst ist, das Starten der Aktuatoranordnung von einem ausgeschalteten Zustand zu ermöglichen, indem ein Betriebszustand der Aktuatoranordnung für eine begrenzte Zeit ermöglicht wird, um ein ordnungsgemäßes Funktionieren der Bewegungssensormittel (6) durch eine Aktivierungsbewegung zu prüfen, wobei die besagte begrenzte Zeit kürzer als oder gleich wie die Prozess-Sicherheitszeit ist.

5. Aktuatoranordnung nach einem der Patentansprüche 1 bis 3, **dadurch gekennzeichnet, dass** das Sicherheitsmittel (10) angepasst ist, das Kraftmittel (2) zu steuern, eine Aktivierungsbewegung des Aktuators (4) zustande zu bringen, bevor die Aktuatoranordnung in einen Betriebszustand gesteuert wird, wobei das Sicherheitsmittel (10) angepasst ist, die Aktuatoranordnung in den Betriebszustand nur dann zu steuern, wenn das Bewegungssensormittel (6) die Aktivierungsbewegung ermittelt.

6. Aktuatoranordnung nach Patentanspruch 5, **dadurch gekennzeichnet, dass** das Sicherheitsmittel (10) angepasst ist, das Kraftmittel (2) zu steuern, eine Aktivierungsbewegung des Aktuators (4) zustande zu bringen, bevor die Aktuatoranordnung in den Betriebszustand gesteuert wird, nur falls die Immobilitätszeit des Aktuators die vorbestimmte Prozess-Sicherheitszeit überschreitet.

7. Aktuatoranordnung nach Patentanspruch 5 oder 6, **dadurch gekennzeichnet, dass** das Sicherheitsmittel (10) angepasst ist, die Aktivierungsbewegung des Aktuators (4) zustande zu bringen, indem die Aktivierungsmittel (12) gesteuert werden.

8. Aktuatoranordnung nach einem der vorhergehenden Patentansprüche, **dadurch gekennzeichnet, dass** die Aktivierungsbewegung des Aktuators (4) eine Hin- und Herbewegung ist.

9. Aktuatoranordnung nach Patentanspruch 8, **dadurch gekennzeichnet, dass** die Aktivierungsbewegung des Aktuators (4) eine reversible Hin- und Herbewegung ist, die in derselben Position anfängt und endet.

10. Aktuatoranordnung nach einem der vorhergehenden Patentansprüche, **dadurch gekennzeichnet, dass** das Bewegungssensormittel (6) ein redundantes Bewegungssensormittel ist, das eine Vielzahl von voneinander unabhängigen Bewegungssensoreinheiten (61, 62) aufweist.

11. Aktuatoranordnung nach einem der vorhergehenden Patentansprüche, **dadurch gekennzeichnet, dass** das Bewegungssensormittel (6) einen digitalen Kodierer aufweist.

12. Aktuatoranordnung nach Patentanspruch 11, **dadurch gekennzeichnet, dass** das Bewegungssensormittel (6) einen Langsame Störsichere Logik -Kodierer aufweist.

13. Aktuatoranordnung nach einem der vorhergehenden Patentansprüche, **dadurch gekennzeichnet, dass** das Kraftmittel (2) einen Frequenzumrichter aufweist.

## Revendications

1. Ensemble actionneur comprenant :
des moyens d'alimentation en énergie (2),
un actionneur (4) alimenté par les moyens d'alimentation en énergie (2), les moyens d'alimentation en énergie (2) étant adaptés pour fournir un mouvement de travail de l'actionneur (4),
des moyens capteurs de mouvement (6) pour contrôler le mouvement de l'actionneur (4), les moyens capteurs de mouvement (6) comprenant au moins une unité de capteur de mouvement (61, 62), les moyens capteurs de mouvement (6) étant adaptés pour fournir des signaux de capteur de mouvement en réponse au mouvement de l'actionneur (4),
des moyens de chronométrage (8) pour recevoir les signaux de capteur de mouvement et mesurer un temps d'immobilité de l'actionneur (4) en fonction des signaux de capteur de mouvement, le temps d'immobilité de l'actionneur représentant le temps écoulé après le mouvement précédent de l'actionneur (4),
des moyens de sécurité (10) pour commander sélectivement l'ensemble actionneur dans un état opérationnel dans lequel le mouvement de travail de l'actionneur (4) est permis et un état de sécurité dans lequel le mouvement de travail de l'actionneur (4) est empêché, les moyens de sécurité (10) étant adaptés pour contrôler le temps d'immobilité de l'actionneur et pour empêcher l'état opérationnel de l'ensemble actionneur dans le cas où le temps d'immobilité de l'actionneur dépasse un temps de sécurité de processus prédéterminé, **caractérisé en ce que**
l'ensemble actionneur comprend en outre des moyens d'actionnement (12) adaptés pour contrôler un temps d'immobilité de l'actionneur pendant un état opérationnel de l'ensemble actionneur, et pour commander les moyens d'alimentation en énergie (2) pour fournir un mouvement d'actionnement de l'actionneur (4) dans le cas où le temps d'immobilité dépasse un temps d'actionnement prédéterminé, le temps d'actionnement étant inférieur ou égal au temps de sécurité de processus, le mouvement d'actionnement étant un petit mouvement tout en étant suffisamment grand pour être détecté par les moyens capteurs de mouvement (6).

2. Ensemble actionneur selon la revendication 1, **caractérisé en ce que** les moyens de sécurité (10) sont adaptés pour empêcher l'état opérationnel de l'ensemble actionneur de telle manière que si l'ensemble actionneur est dans l'état opérationnel quand le temps d'immobilité de l'actionneur dépasse le temps de sécurité de processus prédéterminé les moyens de sécurité (10) commandent l'ensemble actionneur dans l'état de sécurité.

3. Ensemble actionneur selon la revendication 1 ou 2, **caractérisé en ce que** les moyens de sécurité (10) sont en outre adaptés pour commander sélectivement l'ensemble actionneur dans un état intermédiaire dans lequel seul un mouvement d'actionnement de l'actionneur (4) est permis, l'état intermédiaire permettant de vérifier un fonctionnement correct des moyens capteurs de mouvement (6) avant de passer à un état opérationnel.

4. Ensemble actionneur selon la revendication 1 ou 2, **caractérisé en ce que** les moyens de sécurité (10) sont adaptés pour permettre le démarrage de l'ensemble actionneur depuis un état arrêté en permettant un état opérationnel de l'ensemble actionneur pendant un temps limité afin de vérifier le fonctionnement correct des moyens capteurs de mouvement (6) par un mouvement d'actionnement, ledit temps limité étant inférieur ou égal au temps de sécurité de processus.

5. Ensemble actionneur selon l'une quelconque des revendications 1 à 3, **caractérisé en ce que** les moyens de sécurité (10) sont adaptés pour commander les moyens d'alimentation en énergie (2) pour fournir un mouvement d'actionnement de l'actionneur (4) avant de commander l'ensemble actionneur dans un état opérationnel, dans lequel les moyens de sécurité (10) sont adaptés pour commander l'ensemble actionneur dans l'état opérationnel seulement si les moyens capteurs de mouvement (6) détectent le mouvement d'actionnement.

6. Ensemble actionneur selon la revendication 5, **caractérisé en ce que** les moyens de sécurité (10) sont adaptés pour commander les moyens d'alimentation en énergie (2) pour fournir un mouvement d'actionnement de l'actionneur (4) avant de commander l'ensemble actionneur dans l'état opérationnel seulement dans le cas où le temps d'immobilité de l'actionneur dépasse le temps de sécurité de processus prédéterminé.

7. Ensemble actionneur selon la revendication 5 ou 6, **caractérisé en ce que** les moyens de sécurité (10) sont adaptés pour fournir le mouvement d'actionnement de l'actionneur (4) en commandant les moyens d'actionnement (12).

8. Ensemble actionneur selon l'une quelconque des revendications précédentes, **caractérisé en ce que** le mouvement d'actionnement de l'actionneur (4) est un mouvement alternatif.

9. Ensemble actionneur selon la revendication 8, **caractérisé en ce que** le mouvement d'actionnement de l'actionneur (4) est un mouvement alternatif réversible qui démarre et se termine dans une même position.

10. Ensemble actionneur selon l'une quelconque des revendications précédentes, **caractérisé en ce que** les moyens capteurs de mouvement (6) sont des moyens capteurs de mouvement redondants comprenant une pluralité d'unités de capteur de mouvement (61, 62) indépendantes les unes des autres.

11. Ensemble actionneur selon l'une quelconque des revendications précédentes, **caractérisé en ce que** les moyens capteurs de mouvement (6) comprennent un encodeur numérique.

12. Ensemble actionneur selon la revendication 11, **caractérisé en ce que** les moyens capteurs de mouvement (6) comprennent un encodeur logique à seuil élevé.

13. Ensemble actionneur selon l'une quelconque des revendications précédentes, **caractérisé en ce que** les moyens d'alimentation en énergie (2) comprennent un convertisseur de fréquence.
